# EUROPEAN PATENT APPLICATION

(11) **EP 4 804 009 A1**
(43) Date of publication of application: **09.09.2026**
(21) Application number: 25214506.5
(22) Date of filing: 10.11.2025
(51) Int. Cl.: G06F 3/16, G10L 15/22

(54) **INTERACTION CONTROL METHOD, INTERACTION CONTROL DEVICE, ELECTRONIC APPARATUS, AND STORAGE MEDIUM**

(30) Priority: 07.03.2025 CN 202510270070
(71) Applicant: Beijing Zitiao Network Technology Co., Ltd., Beijing 100190 (CN)
(72) Inventor: CAI, Wei, Beijing, 100028 (CN); XU, Meng, Beijing, 100028 (CN); DING, Xiaopeng, Beijing, 100028 (CN); HUANG, Chao, Beijing, 100028 (CN); SHU, Xiaofeng, Beijing, 100028 (CN); CHEN, Manjia, Beijing, 100028 (CN)
(74) Representative: Isarpatent

(57) **Abstract**

Embodiments of the present disclosure provide an interaction control method, an interaction control device, an electronic apparatus and a storage medium, which relate to the technical field of headsets. The method includes: acquiring an interaction state with a terminal apparatus; receiving a voice signal through a microphone; in the case where a bone sound signal is received through a bone sound sensor, determining whether the voice signal is emitted by a wearer at least according to the bone sound signal; and in the case where the voice signal is emitted by the wearer, performing interaction processing with the terminal apparatus based on the interaction state according to the voice signal. Interaction with the terminal apparatus is performed only when it is determined that the voice signal is emitted by the wearer by combining the bone sound signal, thereby solving the problem of a high probability of interaction errors caused by environmental noise.

## Description

### TECHNICAL FIELD

Embodiments of the present disclosure relate to an interaction control method, an interaction control device, an electronic apparatus and a storage medium.

### BACKGROUND

In the digital age, voice interaction technology is widely used in various electronic apparatuses, and small electronic apparatuses such as headsets have become an important carrier.

In the related art, wearable apparatuses such as headsets may receive a voice of a user, and use the voice of the user to interact with a terminal apparatus.

However, due to the complex environment in public places, the voices of other people may be incorrectly collected by the electronic apparatus, and interaction actions with the terminal apparatus may be performed, resulting in a high probability of interaction errors.

### SUMMARY

Embodiments of the present disclosure provide an interaction control method, an interaction control device, an electronic apparatus and a storage medium, to solve the problem of a high probability of interaction errors.

In a first aspect, an embodiment of the present disclosure provides an interaction control method for an electronic apparatus, a processing unit, a bone sound sensor and a microphone are provided in the electronic apparatus, the method is applied to the processing unit, and the method includes: acquiring an interaction state with a terminal apparatus; receiving a voice signal through the microphone; in the case where a bone sound signal is received through the bone sound sensor, determining whether the voice signal is emitted by a wearer at least according to the bone sound signal; and in the case where the voice signal is emitted by the wearer, performing interaction processing with the terminal apparatus based on the interaction state according to the voice signal.

In a second aspect, an embodiment of the present disclosure provides an interaction control device of an electronic apparatus, a processing unit, a bone sound sensor and a microphone are provided in the electronic apparatus, the device is applied to the processing unit, and the device includes: a state acquiring module, which is configured to acquire an interaction state with a terminal apparatus; a signal receiving module, which is configured to receive a voice signal through the microphone; a sound source determining module, which is configured to: in the case where a bone sound signal is received through the bone sound sensor, determine whether the voice signal is emitted by a wearer at least according to the bone sound signal; and an interaction processing module, which is configured to: in the case where the voice signal is emitted by the wearer, perform interaction processing with the terminal apparatus based on the interaction state according to the voice signal.

In a third aspect, an embodiment of the present disclosure provides an electronic apparatus, including: a processing unit, a memory, a bone sound sensor and a microphone;
the memory stores computer-executable instructions;
the processing unit executes the computer-executable instructions stored in the memory, so that the processing unit executes, in combination with the bone sound sensor and the microphone, the interaction control method for the electronic apparatus according to the first aspect and various possible aspects of the first aspect above.

In a fourth aspect, an embodiment of the present disclosure provides a computer-readable storage medium, where computer-executable instructions are stored in the computer-readable storage medium, and when a processor executes the computer-executable instructions, the interaction control method for the electronic apparatus according to the first aspect and various possible designs of the first aspect above is implemented.

In a fifth aspect, an embodiment of the present disclosure provides a computer program product, including a computer program, and when the computer program is executed by a processor, the interaction control method for the electronic apparatus according to the first aspect and various possible designs of the first aspect above is implemented.

The embodiments provide an interaction control method for an electronic apparatus, a device, an apparatus, a storage medium and a program product. The method includes: acquiring an interaction state with a terminal apparatus, determining whether a voice signal is emitted by a wearer by combining a bone sound signal, and performing interaction with the terminal apparatus only when the voice signal is emitted by the wearer, so as to reduce incorrect interaction between the electronic apparatus and the terminal apparatus.

### BRIEF DESCRIPTION OF DRAWINGS

In order to more clearly describe the technical solutions in the embodiments of the present disclosure or in the prior art, the following will briefly introduce the drawings that need to be used in the description of the embodiments or the prior art. Obviously, the drawings in the following description are some embodiments of the present disclosure. For those of ordinary skill in the art, other drawings may be obtained based on these drawings without creative efforts.
Fig. 1 is a schematic diagram of a scenario of an interaction control method for an electronic apparatus provided by the present application;
Fig. 2 is a schematic flowchart of an interaction control method for an electronic apparatus provided by an embodiment of the present application; and
Fig. 3 is a schematic structural diagram of an interaction control device for an electronic apparatus provided by an embodiment of the present application.

### DETAILED DESCRIPTION

In order to make the objectives, technical solutions and advantages of the embodiments of the present disclosure clearer, the technical solutions in the embodiments of the present disclosure will be described clearly and comprehensively below in combination with the drawings in the embodiments of the present disclosure. Obviously, the described embodiments are part of the embodiments of the present disclosure, but not all of them. Based on the embodiments in the present disclosure, all other embodiments obtained by an ordinary person skilled in the art without paying creative effort all belong to the protection scope of the present disclosure.

At present, under the influence of the digital wave, voice interaction technology has been widely and deeply applied in various electronic apparatuses. In particular, small electronic apparatuses such as headsets have become an important carrier of voice interaction technology.

In the related technical field, wearable apparatuses such as headsets show strong voice interaction capabilities. They can accurately receive voice information from users, and use this as a bridge to achieve efficient interaction between users and terminal apparatuses. However, in public places such as subways, buses, shopping malls, due to the complex environment and large traffic, the voices of other people may be incorrectly collected by electronic apparatuses, and interaction actions with terminal apparatuses may be performed, resulting in a high probability of interaction errors.

In view of the above technical problems, the inventors propose the following technical concept: adding a bone sound sensor to an electronic apparatus, and performing interaction with a terminal apparatus according to a voice signal and an existing interaction state only when it is determined that the voice signal is emitted by a wearer at least according to a bone sound signal received by the bone sound sensor.

The present application is applied to a scenario of interaction control of electronic apparatuses. It should be noted that the user information (including but not limited to user apparatus information, user personal information, etc.) and data (including but not limited to data for analysis, stored data, displayed data, etc.) involved in this application are all information and data authorized by users or fully authorized by all parties, and the collection, use and processing of relevant data need to comply with relevant laws, regulations and standards, and provide corresponding operation entrance for users to choose authorization or rejection.

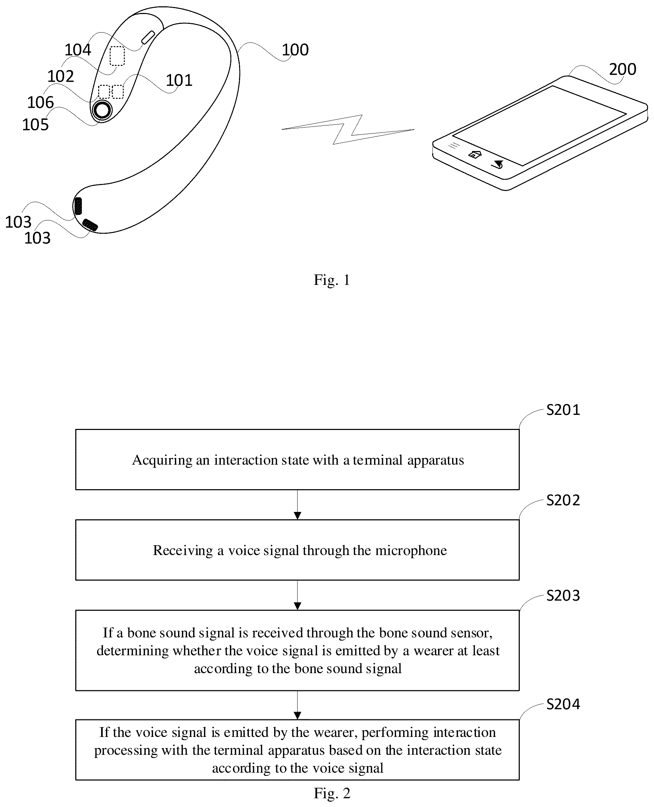

Fig. 1 is a schematic diagram of a scenario of an interaction control method for an electronic apparatus provided by the present application. As shown in Fig. 1, the scenario includes: an electronic apparatus 100 and a terminal apparatus 200, and the electronic apparatus 100 includes a processing unit 101, a bone sound sensor 102, a microphone 103, a wearing detection sensor 104 and a speaker 105.

In a specific implementation process, the electronic apparatus 100 may include a headset such as a split-type headset, a head-mounted headset, or the like, and may also include a virtual reality apparatus, an extended reality apparatus, or the like.

The terminal apparatus 200 includes an apparatus that may perform data input and output, such as a mobile phone, a computer, a laptop, etc.

The electronic apparatus 100 and the terminal apparatus 200 may be connected in a wired or wireless manner.

The processing unit 101 may include a processor of a VPU (Voice Pick-Up Unit, English: Voice Pick-Up) unit, and may also include any type of processor. The processing unit 101 may be connected to the bone sound sensor 102, the microphone 103, the wearing detection sensor 104 and the speaker 105 through wires or wirelessly.

The bone sound sensor 102 may include any type of bone sound sensor such as an acceleration sensor, a vibration sensor, or a piezoelectric bone sound sensor, a capacitive bone sound sensor, an electromagnetic bone sound sensor, etc.

The microphone 103 may include a directional microphone, an omnidirectional microphone, a windproof omnidirectional microphone, etc.

The wearing detection sensor 104 may include an optical sensor, a pressure sensor, an inertial sensor, etc.

The speaker 105 may be any type of speaker for audio output.

The bone sound sensor 102 is configured to utilize a principle of transmitting sound waves through human bone vibration and convert a vibration signal generated by the sound waves into a bone sound signal through a chip in the bone sound sensor.

The microphone 103 is configured to collect a voice of a user that propagates through air.

The wearing detection sensor 104 is configured to detect whether the electronic apparatus 100 is in a wearing state.

The speaker 105 is configured to convert received audio information into an electrical signal and output sound.

The electronic apparatus 100 may further include a memory 106, where the memory stores computer-executable instructions; and the processing unit executes the computer-executable instructions stored in the memory, so that the processing unit executes, in combination with the bone sound sensor 102 and the microphone 103, the interaction control method for the electronic apparatus described in any one of the following embodiments. The memory may include a read-only memory, a random access memory, etc.

It may be understood that the scenario illustrated in the embodiments of the present application does not constitute a specific limitation on the interaction control method for the electronic apparatus. In other feasible implementations of the present application, the above scenario may include more or fewer components than those shown in the figure, or combine certain components, or separate certain components, or have different component arrangements, which may be determined specifically according to an actual application scenario and is not limited herein. The scenario shown in Fig. 1 may be implemented by hardware, software, or a combination of software and hardware.

The technical solutions of the present application and how the technical solutions of the present application solve the above technical problems are described in detail below with specific embodiments. The following specific embodiments may be combined with each other, and the same or similar concepts or processes may not be repeated in certain embodiments. The embodiments of the present application will be described below with reference to the drawings.

Fig. 2 is a schematic flowchart of an interaction control method for an electronic apparatus provided by an embodiment of the present application. The execution body of the embodiment of the present application may be the processing unit 101 in Fig. 1, which is not particularly limited in the embodiment. As shown in Fig. 2, the method includes: step S201 to step S204.

S201: acquiring an interaction state with a terminal apparatus.

In this step, a pre-stored interaction state may be read from a preset location, or the interaction state with the terminal apparatus may be obtained according to an interaction record with the terminal apparatus, and the method may also include sending interaction state query information to the terminal apparatus, so as to obtain an interaction state replied by the terminal apparatus.

For example, after reply information of a voice assistant sent by the terminal apparatus is received, the interaction state is that the reply of the voice assistant is currently being output; for another example, if the electronic apparatus currently does not output any audio and does not send a voice assistant wake-up instruction to the terminal apparatus, the interaction state is a voice assistant wake-awaiting state. For another example, if the electronic apparatus is currently playing audio, then the interaction state is determined as playing audio.

S202: receiving a voice signal through a microphone.

In this step, it may include receiving an electrical signal output by the microphone to obtain the voice signal. It may also include receiving a plurality of voice signals from the microphone, and selecting a voice signal with a better sound pickup effect from the plurality of voice signals.

S203: in the case where the bone sound signal is received through the bone sound sensor, determining whether the voice signal is emitted by the wearer at least according to the bone sound signal.

In this step, the process of receiving the bone sound signal is similar to the process of receiving the voice signal, which will not be repeated here. Determining whether the voice signal is emitted by the wearer at least according to the bone sound signal may include: determining that the voice signal is emitted by the wearer in the case where the bone sound signal is received, or may include: receiving the bone sound signal, and the decibel or intensity of the bone sound signal being greater than a preset decibel threshold or intensity threshold, and may also include: calculating a similarity between the bone sound signal and the voice signal, and determining that the voice signal is emitted by the wearer if the similarity is greater than a preset similarity threshold. Before calculating the similarity between the bone sound signal and the voice signal, noise reduction may also be performed on the bone sound signal and the voice signal.

S204: in the case where the voice signal is emitted by the wearer, performing interaction processing with the terminal apparatus based on the interaction state according to the voice signal.

In this step, in the case where the voice signal is emitted by the wearer, for different interaction states, different interaction manners are used to interact with the terminal apparatus, including but not limited to: sending an instruction of activating the voice assistant to the terminal apparatus, sending an instruction of interrupting the voice assistant to the terminal apparatus, sending an instruction of changing the volume of the terminal apparatus to the terminal apparatus, sending a control instruction for a specific operation to the terminal apparatus, etc.

It may be seen from the description of the above embodiments that, by acquiring the interaction state with the terminal apparatus and determining whether the voice signal is emitted by the wearer by combining the bone sound signal, the embodiments of the present disclosure perform interaction with the terminal apparatus only when the voice signal is emitted by the wearer, thereby reducing incorrect interaction between the electronic apparatus and the terminal apparatus.

In a possible implementation, in the above step S204, in the case where the voice signal is emitted by the wearer, performing the interaction processing with the terminal apparatus based on the interaction state according to the voice signal includes: step S204A1 and step S204A2.

S204A1: in the case where the voice signal is emitted by the wearer and the interaction state is a voice assistant wake-awaiting state, determining whether the voice signal includes a wake-up voice.

In this step, the voice assistant wake-awaiting state represents that the voice assistant in the terminal apparatus is not activated, or the interaction with the voice assistant in the terminal apparatus has not been performed, or the reply of the voice assistant is not played. Determining whether the voice signal includes the wake-up voice includes: inputting the voice signal into a voice recognition model to obtain a voice recognition result output by the voice recognition model, and searching for the wake-up voice in the voice recognition result, and may also include: inputting the voice signal into a large language model to obtain a determination result of the large language model on whether the voice signal includes the wake-up voice.

S204A2: in the case where the voice signal includes the wake-up voice, waking up the voice assistant.

In this step, waking up the voice assistant may include sending a wake-up command to the voice assistant, or sending an instruction of opening the voice assistant to the terminal apparatus.

It may be seen from the description of the above embodiments that the embodiments of the present disclosure wake up the voice assistant only when it is determined that the voice is from the wearer in the state that the voice assistant is not woken up, and continuously receive the voice input by the user, thereby reducing false wake-up of the voice assistant.

In a possible implementation, in the above step S204, in the case where the voice signal is emitted by the wearer, performing the interaction processing with the terminal apparatus based on the interaction state according to the voice signal includes: step S204B.

S204B: in the case where the voice signal is emitted by the wearer and the interaction state is that a reply of the voice assistant is currently being output, stopping outputting the reply of the voice assistant, and sending the voice signal to the terminal apparatus, so that the terminal apparatus inputs the voice signal into the voice assistant, and the voice assistant generates a new reply according to the voice signal.

In this step, stopping outputting the reply of the voice assistant includes sending an interrupt instruction to the terminal apparatus, so that the terminal apparatus inputs an instruction to stop outputting to the voice assistant, thereby causing the voice assistant to stop outputting content and allowing the voice assistant to be in a listening state. The electronic apparatus being currently outputting the reply of the voice assistant may include that the electronic apparatus receives the reply information containing a voice assistant reply identification sent by the terminal apparatus, and the electronic apparatus is currently outputting the reply information when this step is performed. Sending the voice signal to the terminal apparatus may include: converting the voice signal into text and then sending the text to the terminal apparatus, or may include: sending the voice signal directly to the terminal apparatus, and may also include: converting the voice signal into a format required by a preset protocol and then sending the voice signal to the terminal apparatus.

The voice assistant being in the listening state represents that the voice assistant is ready to receive a new voice signal and generate a new reply, and the electronic apparatus will continuously collect voice signals through the microphone and send them to the terminal apparatus, so that the terminal apparatus inputs the voice signals into the voice assistant.

It may be seen from the description of the above embodiments that, by interrupting the output of the voice assistant only when it is determined that the voice signal is emitted by the wearer, the embodiments of the present disclosure avoid the situation that the voice assistant is interrupted due to environmental noise or the voice of a non-wearer.

In a possible implementation, in the above step S204, in the case where the voice signal is emitted by the wearer, performing the interaction processing with the terminal apparatus based on the interaction state according to the voice signal includes:

S204C: in the case where the voice signal is emitted by the wearer, the interaction state is that an audio is currently being played, and a duration of the voice signal is greater than a first preset duration, reducing an output volume of the audio.

In this step, the electronic apparatus is currently outputting other audio such as music and audio in a video other than the reply of the voice assistant, and the volume is reduced in the case where it is determined that the audio voice signal is emitted by the wearer.

The manner of reducing the volume may include reducing the volume of the electronic apparatus itself, and may also include sending a volume reduction instruction to the terminal apparatus, so that the terminal apparatus reduces the volume in response to receiving the volume reduction instruction. Reducing the volume may include reducing the volume by a preset proportion, and may also include reducing the volume to a preset volume. The first preset duration is, for example, 4 seconds, 5 seconds, 6 seconds, etc.

It may be seen from the description of the above embodiments that, by reducing the volume in the case where it is determined that the voice signal of the wearer is received when the audio is output, the embodiments of the present disclosure ensure that the communication between the user and others is not disturbed, and at the same time, the interference of the output audio on the voice signal received by the microphone and the interference of the output audio on the bone sound signal may be reduced.

In a possible implementation, in the above step S204C, in the case where the voice signal is emitted by the wearer, the interaction state is that the audio is currently being played, and the duration of the voice signal is greater than the first preset duration, after reducing the output volume of the audio, the method further includes: step S220A, step S220B or step S220C.

S220A: in the case where a new bone sound signal is not received through the bone sound sensor within a second preset duration after the output volume is reduced, restoring the output volume to a volume before the output volume is reduced.

In this step, restoring the output volume to the volume before the output volume is reduced may include increasing the volume of the electronic apparatus itself to the volume before the output volume is reduced, and may also include sending a volume restoration instruction to the terminal apparatus, so that the terminal apparatus restores the volume to the volume before the output volume is reduced.

The second preset duration is, for example, 12 seconds, 13 seconds, 15 seconds, etc.

For example, before step S204C is performed, the volume is 50, and after step S204C is performed, the volume is 20, and if the new bone sound signal is not received through the bone sound sensor within the second preset duration (15 seconds) after step S204C is performed, then the volume is restored to 50. For another example, before step S204C is performed, the volume is 80%, and after step S204C is performed, the volume is 30%, and if the new bone sound signal is not received through the bone sound sensor within the second preset duration (14 seconds) after step S204C is performed, then the volume is restored to 80%.

S220B: in the case where a new voice signal is not received through the microphone within a second preset duration after the output volume is reduced, restoring the output volume to a volume before the output volume is reduced.

This step is similar to step S220A above, and details are not repeated here.

S220C: in the case where a new voice signal is received through the microphone and a new bone sound signal is received through the bone sound sensor within a second preset duration after the output volume is reduced, determining whether the new voice signal is emitted by the wearer according to the new bone sound signal and the new voice signal; and in the case where the new voice signal is not emitted by the wearer, restoring the output volume to a volume before the output volume is reduced.

In this step, determining whether the new voice signal is emitted by the wearer according to the new bone sound signal and the new voice signal is similar to step S203, and details are not repeated here.

It may be seen from the description of the above embodiments that, by restoring the output volume in the case where the new bone sound signal and the new voice signal are not received, or the received new bone sound signal and the received new voice signal are not emitted by the wearer within the second preset duration after the output volume is reduced, the embodiments of the present disclosure eliminate the need for the user to actively adjust the volume, and reduce the operation steps for the user to change the volume.

In a possible implementation, in the above step S204C, in the case where the voice signal is emitted by the wearer, the interaction state is that the audio is currently being played, and the duration of the voice signal is greater than the first preset duration, after reducing the output volume of the audio, the method further includes: step S230.

S230: in the case where it is detected that the user inputs a volume adjustment instruction within a second preset duration after the output volume is reduced, determining a target volume corresponding to the volume adjustment instruction to be a new output volume.

**In** this step, the process of receiving the volume adjustment instruction input by the user may include receiving a click or a slide of the user on a volume adjustment button, and may also include receiving a volume adjustment instruction sent by the terminal apparatus after the user triggers the volume adjustment button on the terminal apparatus. The volume adjustment instruction may include a volume value, that is, the target volume.

It may be seen from the description of the above embodiments that, by using the volume adjusted by the user as the subsequent actual output volume after the user changes the volume, the embodiments of the present disclosure avoid automatically adjusting the volume to the volume before the volume is reduced after the user adjusts the volume, thereby avoiding negative impact on the user's operation.

In a possible implementation, in the above step S203, determining whether the voice signal is emitted by the wearer at least according to the bone sound signal includes: step S2031.

S2031: determining whether the voice signal is emitted by the wearer according to the bone sound signal and the voice signal.

This step includes: calculating a similarity between the bone sound signal and the voice signal, and determining that the voice signal is emitted by the wearer if the similarity is greater than a preset similarity threshold; and may also include: calculating a similarity between the bone sound signal and the voice signal, and if the similarity is greater than a preset similarity threshold, a time difference between a start time of the bone sound signal and a start time of the voice signal is less than a preset duration threshold, and a time difference between an end time of the bone sound signal and an end time of the voice signal is also less than the preset duration threshold, determining that the voice signal is emitted by the wearer.

It may be seen from the description of the above embodiments that the embodiments of the present disclosure increase the accuracy of determination by combining the bone sound signal and the voice signal.

In a possible implementation, the above embodiments include: step S240 to step S242.

S240: determining, according to the voice signal, whether the voice signal is emitted by the wearer to obtain a first determination result.

In this step, PVAD (Personalized Voice Activity Detection, English: Personalized Voice Activity Detection) may be used to identify the voice signal, determine whether the voice signal is emitted by the wearer, and obtain the first determination result.

S241: determining whether the voice signal is emitted by the wearer according to the bone sound signal and the voice signal to obtain a second determination result.

In this step, this step is similar to step S202 above, and details are not repeated here.

S242: in the case where the first determination result is negative and the second determination result is positive, performing interaction processing with the terminal apparatus based on the interaction state according to the voice signal.

The manner of performing interaction processing with the terminal apparatus in this step is similar to that in step S204 above, and details are not repeated here.

S243: in the case where the first determination result is positive and the second determination result is negative, not performing interaction processing with the terminal apparatus based on the interaction state according to the voice signal.

The manner of performing interaction processing with the terminal apparatus in this step is similar to that in step S204 above, and details are not repeated here.

In a possible implementation, if both determination results are positive, interaction with the terminal apparatus is also performed according to the voice signal.

It may be seen from the description of the above embodiments that, on the basis of determining whether the voice signal is emitted by the wearer by using the voice signal, the embodiments of the present disclosure further determine whether the voice signal is emitted by the wearer by combining the voice signal and the bone sound signal, and take the determination result of combining the bone sound signal as the main basis, thereby achieving the effect of increasing the determination accuracy.

**In** a possible implementation, in the above step S2031, determining whether the voice signal is emitted by the wearer according to the bone sound signal and the voice signal includes: step S20311 and step S20312.

S20311: calculating a correlation between the bone sound signal and the voice signal.

This step includes calculating a correlation between single frame of the bone sound signal and the voice signal, and calculating an overall correlation between the bone sound signal and the voice signal using the correlation between the single frame.

S20312: in the case where the correlation is greater than a preset correlation threshold, determining that the voice signal is emitted by the wearer, otherwise determining that the voice signal is not emitted by the wearer.

In this step, the correlation threshold may be preset by the staff according to experimental data or empirical parameters.

It may be seen from the description of the above embodiments that, by calculating the correlation between the bone sound signal and the voice signal, the embodiments of the present disclosure determine that the voice signal is emitted by the wearer only when the correlation is greater than the preset correlation threshold, which facilitates the subsequent corresponding interaction processing according to whether the voice signal is emitted by the wearer.

In a possible implementation, after the voice signal is received through the microphone in step S202, the method further includes: step S250.

S250: in the case where the bone sound signal is not received through the bone sound sensor, ignoring the voice signal.

In this step, the bone sound signal not being received through the bone sound sensor may include that the bone sound signal is not received from the bone sound sensor at all, and may also include that the intensity of the bone sound signal received from the bone sound sensor is below a preset intensity threshold. Ignoring the voice signal may include not processing the voice signal and not performing the determination process of whether the voice signal is emitted by the wearer.

It may be seen from the description of the above embodiments that, in the case where the bone sound signal is not received, by ignoring the voice signal and not interacting with the terminal apparatus, the embodiments of the present disclosure avoid interference of environmental noise or the voice of a non-wearer.

In a possible implementation, the electronic apparatus further includes a wearing detection sensor. The method provided by any of the above embodiments further includes: step S260.

S260: in the case where a wearing signal sent by the wearing detection sensor is received, performing interaction processing with the terminal apparatus based on the interaction state according to the voice signal.

In this step, the wearing signal may include a signal sent by the wearing detection sensor upon detection of approach of an object, or may be a signal sent after infrared rays are detected, and may also be a signal generated by the wearing detection sensor upon detection of pressure. The process of performing interaction processing with the terminal apparatus based on the interaction state according to the voice signal is similar to that in step S204 above, and details are not repeated here.

It may be seen from the description of the above embodiments that, by interacting with the terminal apparatus in the case where the wearing signal sent by the wearing detection sensor is received, the embodiments of the present disclosure avoid the situation of interacting with the terminal apparatus when the electronic apparatus is not worn.

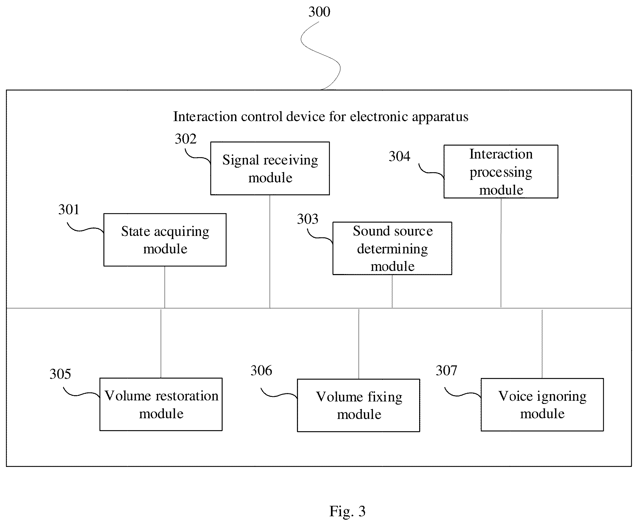

Fig. 3 is a schematic structural diagram of an interaction control device for an electronic apparatus provided by an embodiment of the present application. The interaction control device for the electronic apparatus is applied to a processing unit of the electronic apparatus. As shown in Fig. 3, the interaction control device 300 for the electronic apparatus includes: a state acquiring module 301, a signal receiving module 302, a sound source determining module 303 and an interaction processing module 304.

The state acquiring module 301 is configured to acquire an interaction state with a terminal apparatus;
the signal receiving module 302 is configured to receive a voice signal through a microphone;
the sound source determining module 303 is configured to: in the case where a bone sound signal is received through a bone sound sensor, determine whether the voice signal is emitted by a wearer at least according to the bone sound signal; and
the interaction processing module 304 is configured to: in the case where the voice signal is emitted by the wearer, perform interaction processing with the terminal apparatus based on the interaction state according to the voice signal.

In a possible implementation, the interaction processing module 304 is further configured to: in the case where the voice signal is emitted by the wearer and the interaction state is a voice assistant wake-awaiting state, determining whether the voice signal includes a wake-up voice; and in the case where the voice signal includes the wake-up voice, waking up the voice assistant.

In a possible implementation, the interaction processing module 304 is further configured to: in the case where the voice signal is emitted by the wearer and the interaction state is that a reply of the voice assistant is currently being output, stopping outputting the reply of the voice assistant, and sending the voice signal to the terminal apparatus, so that the terminal apparatus inputs the voice signal into the voice assistant, and the voice assistant generates a new reply according to the voice signal.

In a possible implementation, the interaction processing module 304 is further configured to: in the case where the voice signal is emitted by the wearer, the interaction state is that an audio is currently being played, and a duration of the voice signal is greater than a first preset duration, reducing an output volume of the audio.

In a possible implementation, the interaction control device 300 for the electronic apparatus further includes: a volume restoration module 305.

The volume restoration module 305 is configured to: in the case where a new bone sound signal is not received through the bone sound sensor within a second preset duration after the output volume is reduced, restore the output volume to a volume before the output volume is reduced; or, in the case where a new voice signal is not received through the microphone within a second preset duration after the output volume is reduced, restore the output volume to a volume before the output volume is reduced; or, in the case where a new voice signal is received through the microphone and a new bone sound signal is received through the bone sound sensor within a second preset duration after the output volume is reduced, determine whether the new voice signal is emitted by the wearer according to the new bone sound signal and the new voice signal; and in the case where the new voice signal is not emitted by the wearer, restore the output volume to a volume before the output volume is reduced.

In a possible implementation, the interaction control device 300 for the electronic apparatus further includes: a volume fixing module 306.

The volume fixing module 306 is configured to: in the case where it is detected that the user inputs a volume adjustment instruction within a second preset duration after the output volume is reduced, determine a target volume corresponding to the volume adjustment instruction to be a new output volume.

In a possible implementation, the sound source determining module 303 is further configured to determine whether the voice signal is emitted by the wearer according to the bone sound signal and the voice signal.

In a possible implementation, the sound source determining module 303 is further configured to: determine, according to the voice signal, whether the voice signal is emitted by the wearer to obtain a first determination result; determine whether the voice signal is emitted by the wearer according to the bone sound signal and the voice signal to obtain a second determination result; in the case where the first determination result is negative and the second determination result is positive, change the interaction state according to the voice signal to obtain an updated interaction state; and in the case where the first determination result is positive and the second determination result is negative, not perform interaction processing with the terminal apparatus based on the interaction state according to the voice signal.

In a possible implementation, the sound source determining module 303 is further configured to calculate a correlation between the bone sound signal and the voice signal; and in the case where the correlation is greater than a preset correlation threshold, determine that the voice signal is emitted by the wearer, otherwise determine that the voice signal is not emitted by the wearer.

In a possible implementation, the interaction control device 300 for the electronic apparatus further includes: a voice ignoring module 307.

The voice ignoring module 307 is configured to: in the case where the bone sound signal is not received through the bone sound sensor, ignore the voice signal.

In a possible implementation, the electronic apparatus further includes a wearing detection sensor; and the interaction processing module 304 is further configured to: in the case where a wearing signal sent by the wearing detection sensor is received, perform interaction processing with the terminal apparatus based on the interaction state according to the voice signal.

The apparatus provided by this embodiment may be used to implement the technical solutions of the above method embodiments, and the implementation principles and technical effects thereof are similar, and details are not repeated here in this embodiment.

In particular, according to the embodiments of the present application, the process described above with reference to the flowchart may be implemented as a computer software program. For example, the embodiments of the present application include a computer program product, which includes a computer program carried on a computer-readable storage medium, where the computer program includes program codes for executing the method shown in the flowchart. In such an embodiment, the computer program may be downloaded and installed from a network through a communication apparatus, or installed from a storage apparatus, or installed from the memory. When the computer program is executed by the processing apparatus, the above functions defined in the method of the embodiments of the present application are executed.

It should be noted that the above computer-readable storage medium in the present application may be a computer-readable signal medium or a computer storage medium or any combination of the two. The computer-readable storage medium may be, for example, but not limited to, an electrical, magnetic, optical, electromagnetic, infrared, or semiconductor system, device or member, or any combination of the above. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present application, the computer-readable storage medium may be any tangible medium that contains or stores a program, and the program may be used by or in combination with an instruction execution system, device or member. In the present application, the computer-readable signal medium may include a data signal propagated in a baseband or as a part of a carrier wave, and computer-readable program codes are carried therein. This propagated data signal may adopt multiple forms, including but not limited to an electromagnetic signal, an optical signal or any suitable combination of the above. The computer-readable signal medium may also be any computer-readable storage medium other than the computer-readable storage medium, and the computer-readable signal medium may send, propagate or transmit a program used by or in combination with an instruction execution system, device or member. The program codes contained on the computer-readable storage medium may be transmitted by any suitable medium, including but not limited to: wires, optical cables, RF (radio frequency), etc., or any suitable combination of the above.

The above computer-readable storage medium may be contained in the above electronic apparatus; or it may exist alone without being assembled into the electronic apparatus.

The above computer-readable storage medium carries one or more programs, and when the one or more programs are executed by the electronic apparatus, the electronic apparatus is caused to execute the method shown in the above embodiments.

Computer program codes for executing the operations of the present application may be written in one or more programming languages or a combination thereof, where the programming languages include object-oriented programming languages such as Java, Smalltalk, C++, and also include conventional procedural programming languages such as "C" language or similar programming languages. Program codes may be executed entirely on a user computer, partly on the user computer, as a stand-alone software package, partly on the user computer and partly on a remote computer, or entirely on the remote computer or server. In the case of involving the remote computer, the remote computer may be connected to the user computer through any kind of network, including a local area network (abbreviated as LAN) or a wide area network (abbreviated as WAN), or it may be connected to an external computer (for example, connected through the Internet using an Internet service provider).

The flowchart and block diagrams in the drawings illustrate the architecture, functionality, and operation of possible implementations of systems, methods and computer program products according to various embodiments of the present application. In this regard, each block in the flowchart or block diagrams may represent a module, program segment, or portion of code, which includes one or more executable instructions for implementing the specified logical function(s). It should also be noted that, in some alternative implementations, the functions noted in the block may occur in an order different from that noted in the drawings. For example, two blocks shown in succession may, in fact, be executed substantially concurrently, or the blocks may sometimes be executed in the reverse order, depending upon the functionality involved. It will also be noted that each block of the block diagrams and/or flowchart, and combinations of blocks in the block diagrams and/or flowchart, may be implemented by special purpose hardware-based systems that perform the specified functions or operations, or combinations of special purpose hardware and computer instructions.

The modules involved in the embodiments described herein may be implemented by software or by hardware. Among them, the name of a unit does not constitute a limitation on the unit itself under certain circumstances, for example, the state acquiring module may also be described as an "interaction state acquiring module".

The functions described above herein may be performed at least in part by one or more hardware logic components. For example, without limitation, exemplary types of hardware logic components that may be used include: field programmable gate array (FPGA), application specific integrated circuit (ASIC), application specific standard products (ASSP), system on chip (SOC), complex programmable logic device (CPLD), etc.

The present application further provides a computer-readable storage medium, where computer-executable instructions are stored in the computer-readable storage medium, and when the processing unit executes the computer-executable instructions , the technical solutions of the interaction control method for the electronic apparatus in any one of the above embodiments are implemented, and the implementation principles and beneficial effects thereof are similar to those of the interaction control method for the electronic apparatus, which may be referred to the implementation principles and beneficial effects of the interaction control method for the electronic apparatus, and details are not repeated here.

In the context of the present application, a machine-readable medium may be a tangible medium that may contain or store a program for use by or in combination with an instruction execution system, device or apparatus. The machine-readable medium may be a machine-readable signal medium or a machine-readable storage medium. The machine-readable medium may include, but is not limited to, an electronic, magnetic, optical, electromagnetic, infrared, or semiconductor system, device or apparatus, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage apparatus, a magnetic storage apparatus, or any suitable combination of the above.

The present application further provides a computer program product, which includes a computer program, and when the computer program is executed by the processing unit, the technical solutions of the interaction control method for the electronic apparatus in any one of the above embodiments are implemented, and the implementation principles and beneficial effects thereof are similar to those of the interaction control method for the electronic apparatus, which may be referred to the implementation principles and beneficial effects of the interaction control method for the electronic apparatus, and details are not repeated here.

In a first aspect, according to one or more embodiments of the present disclosure, an interaction control method for an electronic apparatus is provided, a processing unit, a bone sound sensor and a microphone are provided in the electronic apparatus, the method is applied to the processing unit, and the method includes: acquiring an interaction state with a terminal apparatus; receiving a voice signal through the microphone; in the case where a bone sound signal is received through the bone sound sensor, determining whether the voice signal is emitted by a wearer at least according to the bone sound signal; and in the case where the voice signal is emitted by the wearer, performing interaction processing with the terminal apparatus based on the interaction state according to the voice signal.

According to one or more embodiments of the present disclosure, in the case where the voice signal is emitted by the wearer, performing the interaction processing with the terminal apparatus based on the interaction state according to the voice signal includes: in the case where the voice signal is emitted by the wearer and the interaction state is a voice assistant wake-awaiting state, determining whether the voice signal includes a wake-up voice; and in the case where the voice signal includes the wake-up voice, waking up the voice assistant.

According to one or more embodiments of the present disclosure, in the case where the voice signal is emitted by the wearer, performing the interaction processing with the terminal apparatus based on the interaction state according to the voice signal includes: in the case where the voice signal is emitted by the wearer and the interaction state is that a reply of the voice assistant is currently being output, stopping outputting the reply of the voice assistant, and sending the voice signal to the terminal apparatus, so that the terminal apparatus inputs the voice signal into the voice assistant, and the voice assistant generates a new reply according to the voice signal.

According to one or more embodiments of the present disclosure, in the case where the voice signal is emitted by the wearer, performing the interaction processing with the terminal apparatus based on the interaction state according to the voice signal includes: in the case where the voice signal is emitted by the wearer, the interaction state is that an audio is currently being played, and a duration of the voice signal is greater than a first preset duration, reducing an output volume of the audio.

According to one or more embodiments of the present disclosure, in the case where the voice signal is emitted by the wearer, the interaction state is that the audio is currently being played, and the duration of the voice signal is greater than the first preset duration, after reducing the output volume of the audio, the method further includes: in the case where a new bone sound signal is not received through the bone sound sensor within a second preset duration after the output volume is reduced, restoring the output volume to a volume before the output volume is reduced; or, in the case where a new voice signal is not received through the microphone within a second preset duration after the output volume is reduced, restoring the output volume to a volume before the output volume is reduced; or, in the case where a new voice signal is received through the microphone and a new bone sound signal is received through the bone sound sensor within a second preset duration after the output volume is reduced, determining whether the new voice signal is emitted by the wearer according to the new bone sound signal and the new voice signal; and in the case where the new voice signal is not emitted by the wearer, restoring the output volume to a volume before the output volume is reduced.

According to one or more embodiments of the present disclosure, in the case where the voice signal is emitted by the wearer, the interaction state is that the audio is currently being played, and the duration of the voice signal is greater than the first preset duration, after reducing the output volume of the audio, the method further includes: in the case where it is detected that the user inputs a volume adjustment instruction within a second preset duration after the output volume is reduced, determining a target volume corresponding to the volume adjustment instruction to be a new output volume.

According to one or more embodiments of the present disclosure, determining whether the voice signal is emitted by the wearer at least according to the bone sound signal includes: determining whether the voice signal is emitted by the wearer according to the bone sound signal and the voice signal.

According to one or more embodiments of the present disclosure, the method includes:
determining, according to the voice signal, whether the voice signal is emitted by the wearer to obtain a first determination result; determining whether the voice signal is emitted by the wearer according to the bone sound signal and the voice signal to obtain a second determination result; in the case where the first determination result is negative and the second determination result is positive, changing the interaction state according to the voice signal to obtain an updated interaction state; and in the case where the first determination result is positive and the second determination result is negative, not performing interaction processing with the terminal apparatus based on the interaction state according to the voice signal.

According to one or more embodiments of the present disclosure, determining whether the voice signal is emitted by the wearer according to the bone sound signal and the voice signal includes:
calculating a correlation between the bone sound signal and the voice signal; and in the case where the correlation is greater than a preset correlation threshold, determining that the voice signal is emitted by the wearer, otherwise determining that the voice signal is not emitted by the wearer.

According to one or more embodiments of the present disclosure, after receiving the voice signal through the microphone, the method further includes: in the case where the bone sound signal is not received through the bone sound sensor, ignoring the voice signal.

According to one or more embodiments of the present disclosure, the electronic apparatus further includes a wearing detection sensor; and the method further includes: in the case where a wearing signal sent by the wearing detection sensor is received, performing interaction processing with the terminal apparatus based on the interaction state according to the voice signal.

In a second aspect, according to one or more embodiments of the present disclosure, an interaction control device for an electronic apparatus is provided, a processing unit, a bone sound sensor and a microphone are provided in the electronic apparatus, the device is applied to the processing unit, and the apparatus includes: a state acquiring module, configured to acquire an interaction state with a terminal apparatus; a signal receiving module, configured to receive a voice signal through the microphone; a sound source determining module, configured to: in the case where a bone sound signal is received through the bone sound sensor, determine whether the voice signal is emitted by a wearer at least according to the bone sound signal; and an interaction processing module, configured to: in the case where the voice signal is emitted by the wearer, perform interaction processing with the terminal apparatus based on the interaction state according to the voice signal.

According to one or more embodiments of the present disclosure, the interaction processing module is further configured to: in the case where the voice signal is emitted by the wearer and the interaction state is a voice assistant wake-awaiting state, determining whether the voice signal includes a wake-up voice; and in the case where the voice signal includes the wake-up voice, waking up the voice assistant.

According to one or more embodiments of the present disclosure, the interaction processing module is further configured to: in the case where the voice signal is emitted by the wearer and the interaction state is that a reply of the voice assistant is currently being output, stopping outputting the reply of the voice assistant, and sending the voice signal to the terminal apparatus, so that the terminal apparatus inputs the voice signal into the voice assistant, and the voice assistant generates a new reply according to the voice signal.

According to one or more embodiments of the present disclosure, the interaction processing module is further configured to: in the case where the voice signal is emitted by the wearer, the interaction state is that an audio is currently being played, and a duration of the voice signal is greater than a first preset duration, reducing an output volume of the audio.

According to one or more embodiments of the present disclosure, the interaction control device for the electronic apparatus further includes: a volume restoration module 305.

The volume restoration module is configured to: in the case where a new bone sound signal is not received through the bone sound sensor within a second preset duration after the output volume is reduced, restore the output volume to a volume before the output volume is reduced; or, in the case where a new voice signal is not received through the microphone within a second preset duration after the output volume is reduced, restore the output volume to a volume before the output volume is reduced; or, in the case where a new voice signal is received through the microphone and a new bone sound signal is received through the bone sound sensor within a second preset duration after the output volume is reduced, determine whether the new voice signal is emitted by the wearer according to the new bone sound signal and the new voice signal; and in the case where the new voice signal is not emitted by the wearer, restore the output volume to a volume before the output volume is reduced.

According to one or more embodiments of the present disclosure, the interaction control device for the electronic apparatus further includes: a volume fixing module.

The volume fixing module is configured to: in the case where it is detected that the user inputs a volume adjustment instruction within a second preset duration after the output volume is reduced, determine a target volume corresponding to the volume adjustment instruction to be a new output volume.

According to one or more embodiments of the present disclosure, the sound source determining module is further configured to determine whether the voice signal is emitted by the wearer according to the bone sound signal and the voice signal.

According to one or more embodiments of the present disclosure, the sound source determining module is further configured to: determine, according to the voice signal, whether the voice signal is emitted by the wearer to obtain a first determination result; determine whether the voice signal is emitted by the wearer according to the bone sound signal and the voice signal to obtain a second determination result; in the case where the first determination result is negative and the second determination result is positive, change the interaction state according to the voice signal to obtain an updated interaction state; and in the case where the first determination result is positive and the second determination result is negative, not perform interaction processing with the terminal apparatus based on the interaction state according to the voice signal.

According to one or more embodiments of the present disclosure, the sound source determining module is further configured to calculate a correlation between the bone sound signal and the voice signal; and in the case where the correlation is greater than a preset correlation threshold, determine that the voice signal is emitted by the wearer, otherwise determine that the voice signal is not emitted by the wearer.

According to one or more embodiments of the present disclosure, the interaction control device for the electronic apparatus further includes: a voice ignoring module.

The voice ignoring module is configured to: in the case where the bone sound signal is not received through the bone sound sensor, ignore the voice signal.

According to one or more embodiments of the present disclosure, the electronic apparatus further includes a wearing detection sensor; and the interaction processing module is further configured to: in the case where a wearing signal sent by the wearing detection sensor is received, perform interaction processing with the terminal apparatus based on the interaction state according to the voice signal.

In a third aspect, according to one or more embodiments of the present disclosure, an electronic apparatus is provided, and includes: a processing unit, a memory, a bone sound sensor and a microphone;
the memory stores computer-executable instructions;
the processing unit executes the computer-executable instructions stored in the memory, so that the processing unit executes, in combination with the bone sound sensor and the microphone, the interaction control method for the electronic apparatus according to the first aspect and various possible aspects of the first aspect above.

According to one or more embodiments of the present disclosure, the electronic apparatus further includes a wearing detection sensor.

In a fourth aspect, according to one or more embodiments of the present disclosure, a computer-readable storage medium is provided, where computer-executable instructions are stored in the computer-readable storage medium, and when a processor executes the computer-executable instruction , the interaction control method for the electronic apparatus according to the first aspect and various possible designs of the first aspect above is implemented.

In a fifth aspect, according to one or more embodiments of the present disclosure, a computer program product is provided, which includes a computer program, and when the computer program is executed by a processor, the interaction control method for the electronic apparatus according to the first aspect and various possible designs of the first aspect above is implemented.

The above description is only preferred embodiments of the present disclosure and an explanation of the technical principles employed. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosed concept. For example, a technical solution formed by replacing the above features with technical features with similar functions disclosed in (but not limited to) the present disclosure.

In addition, although the operations are depicted in a particular order, this should not be understood as requiring these operations to be performed in the particular order shown or in a sequential order. Under certain circumstances, multitasking and parallel processing may be advantageous. Likewise, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. Conversely, the specific features and actions described above are merely exemplary forms for implementing the claims.

## Claims

1. An interaction control method for an electronic apparatus (100), wherein a processing unit (101), a bone sound sensor (102) and a microphone (103) are provided in the electronic apparatus (100), the method is applied to the processing unit (101), and the method comprises:
acquiring an interaction state with a terminal apparatus (200);
receiving a voice signal through the microphone;
if a bone sound signal is received through the bone sound sensor (102), determining whether the voice signal is emitted by a wearer at least according to the bone sound signal; and
if the voice signal is emitted by the wearer, performing interaction processing with the terminal apparatus (200) based on the interaction state according to the voice signal.

2. The method of claim 1, wherein if the voice signal is emitted by the wearer, performing the interaction processing with the terminal apparatus (200) based on the interaction state according to the voice signal comprises:
if the voice signal is emitted by the wearer and the interaction state is a voice assistant wake-awaiting state, determining whether the voice signal comprises a wake-up voice; and
if the voice signal comprises the wake-up voice, waking up the voice assistant.

3. The method of claim 1, wherein if the voice signal is emitted by the wearer, performing the interaction processing with the terminal apparatus (200) based on the interaction state according to the voice signal comprises:
if the voice signal is emitted by the wearer and the interaction state is that a reply of a voice assistant is currently being outputting, stopping outputting the reply of the voice assistant, and sending the voice signal to the terminal apparatus (200), such that the terminal apparatus (200) inputs the voice signal into the voice assistant to enable the voice assistant to generate a new reply according to the voice signal.

4. The method of claim 1, wherein if the voice signal is emitted by the wearer, performing the interaction processing with the terminal apparatus (200) based on the interaction state according to the voice signal comprises:
if the voice signal is emitted by the wearer, the interaction state is that an audio is currently being played, and a duration of the voice signal is greater than a first preset duration, reducing an output volume of the audio.

5. The method of claim 4, wherein after reducing the output volume of the audio, the method further comprises:
if a new bone sound signal is not received through the bone sound sensor (102) within a second preset duration after the output volume is reduced, restoring the output volume to a volume before the output volume is reduced; or,
if a new voice signal is not received through the microphone (103) within a second preset duration after the output volume is reduced, restoring the output volume to a volume before the output volume is reduced; or,
if a new voice signal is received through the microphone (103) and a new bone sound signal is received through the bone sound sensor (102) within a second preset duration after the output volume is reduced, determining whether the new voice signal is emitted by the wearer according to the new bone sound signal and the new voice signal; and if the new voice signal is not emitted by the wearer, restoring the output volume to a volume before the output volume is reduced.

6. The method of claim 4, wherein after reducing the output volume of the audio, the method further comprises:
if it is detected that a user inputs a volume adjustment instruction within a second preset duration after the output volume is reduced, determining a target volume corresponding to the volume adjustment instruction to be a new output volume.

7. The method of claim 1, wherein determining whether the voice signal is emitted by the wearer at least according to the bone sound signal comprises:
determining whether the voice signal is emitted by the wearer according to the bone sound signal and the voice signal.

8. The method of claim 7, wherein the method comprises:
according to the voice signal, determining whether the voice signal is emitted by the wearer to obtain a first determination result;
determining whether the voice signal is emitted by the wearer according to the bone sound signal and the voice signal to obtain a second determination result;
if the first determination result is negative and the second determination result is positive, changing the interaction state according to the voice signal, to obtain an updated interaction state; and
if the first determination result is positive and the second determination result is negative, not performing interaction processing with the terminal apparatus (200) based on the interaction state according to the voice signal.

9. The method of claim 7 or 8, wherein determining whether the voice signal is emitted by the wearer according to the bone sound signal and the voice signal comprises:
calculating a correlation between the bone sound signal and the voice signal; and
if the correlation is greater than a preset correlation threshold, determining that the voice signal is emitted by the wearer, otherwise determining that the voice signal is not emitted by the wearer.

10. The method of any one of claims 1 to 7, wherein after receiving the voice signal through the microphone, the method further comprises:
if the bone sound signal is not received through the bone sound sensor (102), ignoring the voice signal.

11. The method of any one of claims 1 to 7, wherein the electronic apparatus (100) further comprises a wearing detection sensor (104), and the method further comprises:
if a wearing signal sent by the wearing detection sensor (104) is received, performing interaction processing with the terminal apparatus (200) based on the interaction state according to the voice signal.

12. An interaction control device (300) for an electronic apparatus (100), wherein a processing unit (101), a bone sound sensor (102) and a microphone (103) are provided in the electronic apparatus (100), the device is applied to the processing unit (101), and the device comprises:
a state acquiring module (301), configured to acquire an interaction state with a terminal apparatus (200);
a signal receiving module (302), configured to receive a voice signal through the microphone (103);
a sound source determining module (303), configured to: if a bone sound signal is received through the bone sound sensor (102), determine whether the voice signal is emitted by a wearer at least according to the bone sound signal; and
an interaction processing module (304), configured to: if the voice signal is emitted by the wearer, perform interaction processing with the terminal apparatus (200) based on the interaction state according to the voice signal.

13. An electronic apparatus (100), comprising: a processing unit (101), a memory (106), a bone sound sensor (102) and a microphone (103);
wherein the memory (106) stores computer-executable instructions;
the processing unit (101) executes the computer-executable instructions stored in the memory (106), so that the processing unit (101) executes, in combination with the bone sound sensor (102) and the microphone (103), the interaction control method for the electronic apparatus (100) of any one of claims 1 to 11.

14. The electronic apparatus (100) of claim 13, further comprising a wearing detection sensor (104).

15. A computer-readable storage medium, wherein computer-executable instructions are stored in the computer-readable storage medium, and when a processor executes the computer-executable instructions, the interaction control method for the electronic apparatus (100) of any one of claims 1 to 11 is implemented.
